**Europäisches Patentamt**

(19) **European Patent Office**

**Office européen des brevets**

(11) Numéro de publication : **0 084 548**
**B1**

(12) FASCICULE DE BREVET EUROPÉEN

(45) Date de publication du fascicule du brevet :
28.05.86

(51) Int. Cl.⁴ : **B 65 G 47/26**

(21) Numéro de dépôt : **82902352.2**

(22) Date de dépôt : **27.07.82**

(86) Numéro de dépôt international :
**PCT/FR 82/00129**

(87) Numéro de publication internationale :
**WO/8300479 (17.02.83 Gazette 83/05)**

(54) DISPOSITIF POUR L'ACCUMULATION SANS PRESSION DE CHARGES SUR TRANSPORTEURS A ROULEAUX.

(30) Priorité : 30.07.81 FR 8115009

(43) Date de publication de la demande :
03.08.83 Bulletin 83/31

(45) Mention de la délivrance du brevet :
28.05.86 Bulletin 86/22

(84) Etats contractants désignés :
DE GB

(56) Documents cités :
CH-A- 616 385
DE-A- 2 214 168
DE-A- 2 805 036
FR-A- 2 297 793

(73) Titulaire : JAFFRE, Félicien
Samovie, rue du Commandant Le Prieur, Kéryado
F-56100 Lorient (FR)

(72) Inventeur : JAFFRE, Félicien
Samovie, rue du Commandant Le Prieur, Kéryado
F-56100 Lorient (FR)

(74) Mandataire : Phélip, Bruno et al
c/o Cabinet Harlé & Phélip 21, rue de la Rochefoucauld
F-75009 Paris (FR)

## Description

La présente invention concerne des perfectionnements aux transporteurs à rouleaux entraînés par friction et permettant l'accumulation de charges sans pression, à intervalles réguliers ou non.

En manutention, on a reconnu depuis longtemps l'intérêt pratique de l'accumulation des charges industrielle et commerciale où elle permet entre autre d'assurer un travail régulier de machines, d'installations de traitement, de conditionnement ou autres. On connaît ainsi des systèmes à butées d'arrêt accumulant des charges au contact avec une poussée relativement faible. Plus récemment, on a proposé des transporteurs comportant des sections successives de rouleaux débrayables entraînés par friction ou par chaîne et pignons, chaque section étant munie d'un détecteur de charge qui, lorsqu'il est atteint par une charge, débraye la friction ou les pignons des rouleaux de la section immédiatement amont en mettant ainsi en roue libre lesdits rouleaux et en provoquant un ralentissement puis l'arrêt de la charge portée par cette section, et ainsi de suite. Un dispositif transporteur à chaînes avec des sections modulaires de rouleaux, pour l'accumulation de charges sans pression a récemment été décrit dans le brevet CH-A-616 385 ; ce transporteur, du type énoncé dans le préambule de la revendication 1, prévoit que l'immobilisation d'une charge sur une section porteuse est obtenue par la présence d'une charge sur la section aval immédiatement adjacente qui actionne le détecteur associé à celle-ci ; chaque détecteur actionné par une charge permet le blocage des rouleaux de la section adjacente immédiatement adjacente en amont ; le blocage est ici réalisé au moyen d'un élément de couplage à ressorts avec un dispositif du type à cliquet et rochet. Toutes ces dispositions connues ont en commun l'inconvénient d'être très coûteuses à l'achat comme à la maintenance ainsi que celui d'exiger un réglage des appareils en fonction du poids des charges, et par conséquent de ne pas permettre la manutention, par un transporteur, de charges de poids et d'encombrement variant de l'une à l'autre ; ceci venant s'ajouter aux autres inconvénients spécifiques de chaque type d'appareil.

L'invention se propose de perfectionner de tels transporteurs à rouleaux à accumulation sans pression, notamment en leur conférant une plus grande souplesse d'utilisation, avec une aptitude à transporter des charges d'encombrement et de poids différents, séparés ou en bacs, ou encore des bacs vides. L'invention a aussi pour but d'obtenir ces résultats aux moindres frais d'investissement, de maintenance et de fonctionnement.

En cherchant à pallier ces inconvénients des transporteurs à accumulation sans pression, le demandeur a eu l'idée de bloquer, dans un transporteur à friction, les rouleaux porteurs eux-mêmes et non d'utiliser à cet effet un dispositif intermédiaire agissant sur l'arbre d'entraînement desdits rouleaux à partir de la courroie d'entraînement général du transporteur. L'invention a donc pour objet un transporteur à rouleaux pour l'accumulation de charges sans pression, dans lequel les rouleaux porteurs forment des sections porteuses dont chacune comporte un détecteur de charge qui, lorsqu'il est actionné par une charge, agit sur un dispositif de blocage du type à rochet permettant l'arrêt d'au moins un rouleau de la section porteuse amont immédiatement adjacente à celle où est disposé le détecteur actionné, caractérisé par le fait que les rouleaux sont entraînés par friction au moyen d'une courroie, et que ledit dispositif de blocage du type à rochet comprend un cliquet coopérant avec des dents ou des orifices ménagés à la périphérie des rouleaux des sections porteuses, qui constituent des roues à rochet. Des moyens sont avantageusement prévus, à la manière connue, sur la section de tête (première section aval d'un groupe de sections) pour débloquer ses rouleaux lors de la remise en route du transporteur. Dans une variante, les différentes sections peuvent être constituées d'un certain nombre de rouleaux entourés d'une bande continue, certains des rouleaux étant entraînés par friction et équipés de cliquets de blocage et déblocage.

On a décrit ci-après divers exemples de réalisation du transporteur selon l'invention en se référant aux dessins annexés dans lesquels :

Figure 1 est une vue en coupe longitudinale schématique d'une suite d'accumulation formée de sections de rouleaux, selon l'invention;

Figure 2 représente une vue en coupe longitudinale verticale montrant schématiquement les commandes du transporteur de l'invention,

Figure 3 est une vue schématique en plan du transporteur,

Figure 4 représente à plus grande échelle le dispositif d'accumulation et de remise en route,

Figure 5 est une vue schématique d'un dispositif modulaire selon l'invention.

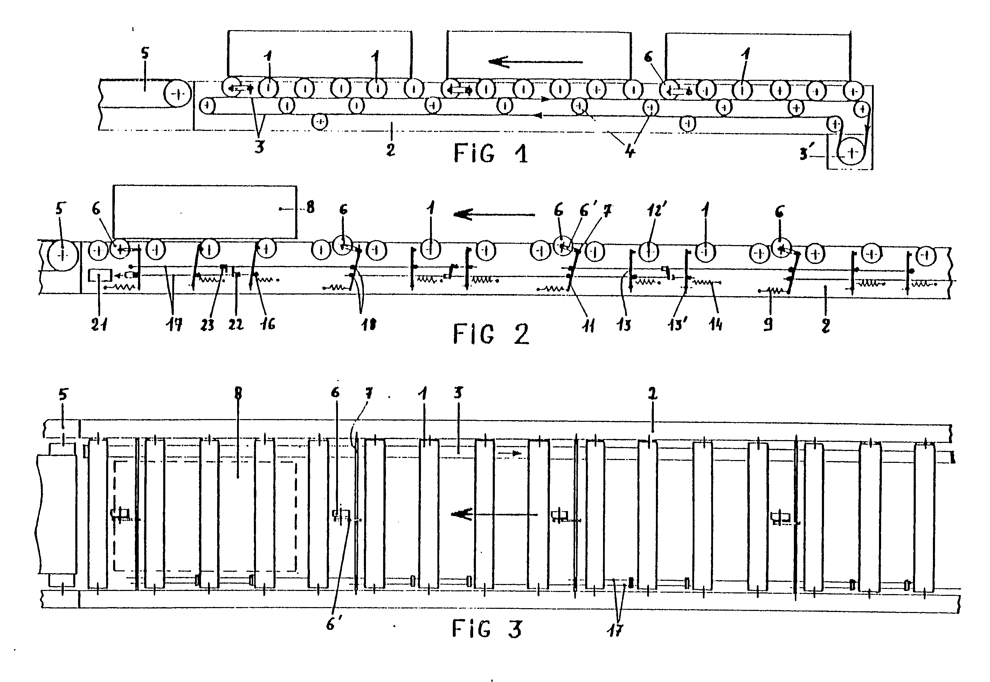

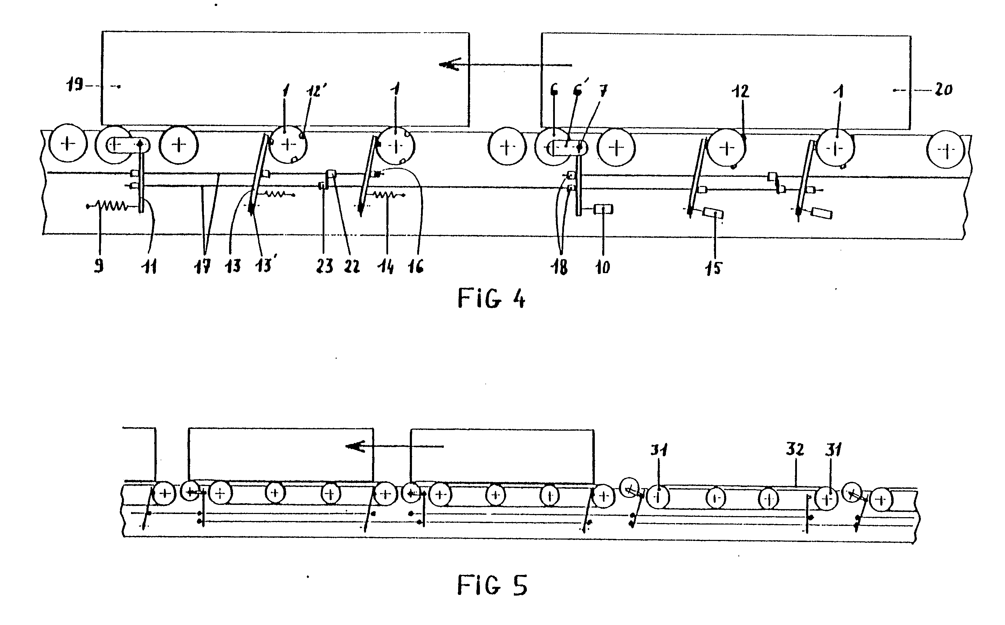

Comme représenté aux figures 1 à 4, les rouleaux 1 du transporteur 2 à accumulation sont entraînés tangentiellement à friction par une courroie 3 appliquée par des galets presseurs 4 contre les rouleaux 1 et actionnée par un moteur 3'. Dans l'exemple, les charges ammenées par le transporteur 2 jusqu'à la tête de celui-ci sont reprises par un transporteur 5 au rythme de l'exploitation. Les charges peuvent représenter une certaine variété de dimensions, de masse, de forme, et de consistance suivant le gabarit de l'appareil, le pas des rouleaux et la force d'entraînement, le transporteur étant étudié en fonction des caractéristiques limites des charges à véhiculer. Les détecteurs 6 à raison d'un détecteur par section de rouleaux déterminée par l'intervalle entre deux détecteurs consécutifs, sont en légère saillie sur le plan supérieur tangent aux rouleaux et sont montés à l'extrémité d'un levier 6' pivotant autour d'un axe 7 transversal à la voie de roulement : chaque levier 6' s'abaisse par pivotement autour de son axe 7 lorsqu'une charge 8 passe sur son détecteur 6 et est rappelé par un ressort 9 où un contrepoids 10. Chaque détecteur 6 est équipé d'une bielle 11 qui peut prendre deux positions selon que le détecteur supporte où non une charge 8.

Tous les rouleaux 1 ou seulement une partie d'entre eux comportent sur la totalité ou sur une partie de leur périphérie proche d'une de leurs extrémités un rochet 12 ou des trous 12' percés dans leur paroi. Un cliquet 13 pivoté en 13' sur le chassis et rappelé par un ressort 14 ou contrepoids 15 tend à venir s'appliquer sur le rochet ou dans le trou 12 du rouleau correspondant. Le cliquet 13 est maintenu dans chaque section grâce aux butées 16 fixées sur le cable ou barre 17, par les 2 biellettes 11 situées en aval. D'autre part, le cable 17 est retenu au moyen de 2 butées 18 fixées sur lui en s'appuyant contre lesdites biellettes 11. Dans ces conditions, lorsque deux charges 19 et 20 actionnent simultanément les détecteurs 6 de deux sections consécutives, en les escamotant, et seulement dans ce cas, les biellettes 11 desdites sections libèrent le cable 17, les cliquets 13 appelés par leurs ressorts 14 viennent au contact de la périphérie des rouleaux 1 de la section portant la charge 20 jusqu'à rencontrer et engager la première dent du rochet 12 ou le premier trou 12' du rouleau qui se trouve donc immédiatement bloqué en rotation : la courroie d'entraînement patine sur les rouleaux de la section sur les rouleaux bloqués de laquelle s'arrête la charge 20 ; de la même manière, les charges suivantes en amont viennent s'immobiliser successivement sur leur section porteuse, à condition que la section respective avant soit occupée par une charge. On dispose d'une accumulation de charges sur la partie amont du transporteur selon l'invention.

Si la charge 19 est ammenée à progresser sur le transporteur 5, elle quitte le détecteur 6 de sa section, celui-ci reprenant sa position en saillie (ou de repos) sous le rappel de son ressort 9 ou contrepoids 10. Le détecteur 6 rappelle alors le cable 17 par les butées 18, libérant ainsi les rouleaux de la section amont porteuse de la charge 20 par le rappel exercé par les butées 16 sur les cliquets 13'-13 : les rouleaux 1 sont de nouveau entraînés par la courroie 3 et la charge 20 reprend sa progression vers l'aval. Il se produit ainsi une progression « en cascade » des charges aval successives chaque fois qu'une charge quitte le détecteur 6 de sa section porteuse.

On notera que si l'on enlève une charge d'une section, telle que 20, en conservant la charge 19 restant sur sa section, les charges des sections aval progresseront successivement d'une section en comblant le vide laissé par l'enlèvement de la charge 20.

Pour assurer le redémarrage des charges accumulées, lorsque la première reprendra sa progression, on prévoit un dispositif 21, ou manuel, ou électro-aimant ou vérin agissant de manière à exercer la traction nécessaire sur le câble 17 pour libérer les rouleaux. Ce dispositif peut être commandé par le transporteur 5 (machine ou autre) suivant les besoins de l'installation et de l'exploitation. Ce dispositif 21 peut par exemple être constitué par une tête creuse allongée en boutonnière dans laquelle la butée 18 pourra, lorsque le détecteur 6 s'escamotera sous une charge, se déplacer librement de la distance nécessaire à l'enclenchement des cliquets 13 dans les rochets 12 ou trous 12'.

Pour obtenir le redémarrage simultané de deux ou plusieurs charges, une butée 22 fixée sur le câble 17 de la section aval ramène le câble 17 de la section amont au moyen d'une butée 23 fixée sur ce câble en aval de la butée 22 lorsqu'on exerce une traction sur le câble 17 de la section aval.

Dans l'exemple représenté à la figure 5, chaque section de rouleaux 1 est constituée, de manière à constituer un dispositif modulaire, d'un certain nombre de rouleaux (au moins deux) 31 sur lesquels est tendue une courroie 32 qu'ils entraînent ; un détecteur 6 est monté en aval de chacun des modules à partir du premier. Comme dans l'exemple des figures 1 à 4, les détecteurs sont reliés entre eux deux à deux au moyen de biellettes 11, des butées 16 et 18, des cliquets et rochets 12 et 13 d'au moins un rouleau par module, dont le bord ne porte pas la courroie 32 pour réserver la place des cliquets et rochets. Dans ces conditions, les rouleaux 1 d'un module sont, ou bloqués en rotation, ou libérés lorsque les détecteurs correspondants à deux modules consécutifs sont, ou bien escamotés simultanément par une charge, ou bien dégagés de charge. Cette variante modulaire fournit un transporteur à accumulation de fonctionnement plus souple et plus silencieux que celui de l'exemple précédent.

Les perfectionnements apportés selon l'invention aux transporteurs à accumulation sans pression présentent donc bien les avantages recherchés de fiabilité, de larges possibilités d'exploitation, de souplesse et d'économie tant dans leur maintenance que dans leur construction : sur ce dernier point notamment, ils ne nécessitent aucun des nombreux moyens individuels coûteux tels que moteurs « par section » ou débrayages séparés pour chacun des rouleaux qui devraient être utilisés en l'absence desdits perfectionnements.

**Revendications**

1. Transporteur à rouleaux pour l'accumulation de charges sans pression, dans lequel les rouleaux porteurs (1) forment des sections porteuses dont chacune comporte un détecteur de charge (6) qui, lorsqu'il est actionné par une charge, agit sur un dispositif de blocage, du type à rochet permettant l'arrêt d'au moins un rouleau de la section porteuse amont immédiatement adjacente à celle où est disposé le détecteur actionné, ce transporteur étant caractérisé en ce que les rouleaux (1) sont entraînés par friction au moyen d'une courroie (3), et que ledit dispositif de blocage du type à rochet comprend un cliquet (13), destiné à coopérer avec des dents (12) ou des orifices (12') ménagés à la périphérie des rouleaux (1) des sections porteuses.

2. Transporteur selon la revendication 1, caractérisé en ce que, sur la première section aval d'un groupe de sections d'accumulation, des moyens (21) sont prévus pour débloquer les rouleaux (1) en vue de la remise en route du transporteur.

3. Transporteur selon l'une des revendications 1 et 2, caractérisé en ce que des moyens (7-11, 16-18) solidarisent les dispositifs de blocage (12-13) de deux sections consécutives avec les détecteurs de charge (6) de ces sections de telle manière que les rouleaux (1) de la section porteuse amont d'une charge (8) ne peuvent être bloqués en rotation que si la section aval est elle même chargée, les détecteurs (6) au repos retenant les cliquets en position de rotation des rouleaux.

4. Transporteur selon la revendication 3 caractérisé en ce que dans chaque section, le détecteur de charge (6) est pivotable autour d'un axe (13') parallèle aux rouleaux (1), qu'une bielle (11) est solidaire du pivotement du détecteur et est rappelée en position de repos par un ressort (9), qu'un cliquet (13) pivotant autour d'un point du chassis est appelé par un ressort (14) pour s'appliquer contre un rouleau (1), qu'une butée (16) est fixée sur un câble (17) en appui aval contre le cliquet (13) en position de repos du détecteur et que ledit câble (17) est retenu par les bielles (11) de deux sections consécutives au moyen de butées (18) fixées sur le câble (17) en appui amont contre celles-ci.

5. Transporteur selon l'une des revendications 1 à 4 caractérisé par le fait que chacune de ses sections est constituée par au moins deux rouleaux (1) et par une courroie (32) entraînée par lesdits rouleaux et un détecteur (6) monté entre deux sections modulaires consécutives, chaque détecteur (6) étant équipé pour assurer le blocage et le déblocage de chaque section.

**Claims**

1. Roller conveyor for accumulating loads without pressure, in which the carrying rollers (1) form carrying sections, each of which has a load detector (6) which, when it is actuated by a load, acts on a ratchet-type locking device making it possible to stop at least one roller of the upstream carrying section immediately adjacent to that on which the actuated detector is arranged, this conveyor being characterized in that the rollers (1) are driven by friction by means of a belt (3), and in that the said ratchet-type locking device has a pawl (13) intended to interact with teeth (12) or orifices (12') formed on the periphery of the rollers (1) of the carrying sections.

2. Conveyor according to Claim 1, characterized in that on the first downstream section of a group of accumulating sections, means (21) are provided for releasing the rollers (1) in order to restart the conveyor.

3. Conveyor according to one of Claims 1 and 2, characterized in that means (7-11, 16-18) connect the locking devices (12-13) of two consecutive sections integrally to the load detectors (6) of these sections, in such a way that the rollers (1) of the upstream carrying section of a load (8) can be locked in terms of rotation only if the downstream section is itself loaded, the detectors (6) at rest retaining the pawls in the rotary position of the rollers.

4. Conveyor according to Claim 3, characterized in that, in each section, the load detector (6) is pivotable about an axle (13') parallel to the rollers (1), in that a connecting rod (11) functions integrally with the pivoting of the detector and is returned to the position of rest by a spring (9), in that a pawl (13), pivoting about a point on the frame, is drawn by a spring (14) so as to come up against a roller (1), in that a stop (16) is fastened to a cable (17) so as to bear downstream against the pawl (13) in the position of rest of the detector, and in that the said cable (17) is retained by the connecting rods (11) of two consecutive sections by means of stops (18) fastened to the cable (17) so as to bear upstream against the said connecting rods (11).

5. Conveyor according to one of Claims 1 to 4, characterized in that each of its sections consists of at least two rollers (1) and of a belt (32) driven by the said rollers and a detector (6) mounted between two consecutive modular sections, each detector (6) being equipped to ensure the locking and release of each section.

**Patentansprüche**

1. Rollenbahnförderer zum drucklosen Sammeln von Lasten mit Tragrollen (1), die Tragabschnitte ausbilden, von denen jeder einen Lastdetektor (6) aufweist, der bei seiner Betätigung durch eine Last auf eine Blockeinrichtung mit einem Klinkenwerk einwirkt, wodurch wenigstens eine der Tragrollen dieses Abschnitts angehalten werden kann, die sich unmittelbar vor dem jenigen Abschnitt befindet, an dem sich der betätigte Detektor befindet, dadurch gekennzeichnet, daß die Tragrollen (1) von wenigstens einem Riemen (3) durch Reibung angetrieben sind und daß die Blockiereinrichtung eine Sperrklinke (13) aufweist, die mit Zähnen oder Öffnungen (12') zusammenarbeitet, die am Umfang der Tragrollen (1) der Tragabschnitte vorgesehen sind.

2. Rollenbahnförderer nach Anspruch 1, dadurch gekennzeichnet, daß an dem ersten Abschnitt vor einer Gruppe von Sammelabschnitten Mittel (21) vorgesehen sind, um die Blockierung der Rollen (1) zwecks Wiederbetätigung des Förderers zu lösen.

3. Rollenbahnförderer nach Anspruch 1 oder Anspruch 2, dadurch gekennzeichnet, daß Mittel (7-11, 16, 18) vorgesehen sind, die die Blockiereinrichtung (12, 13) zweier aufeinander folgender Abschnitte mit den Detektoren (6) dieser Abschnitte derart verbinden, daß die Tragrollen (1) des vor einer Last (8) befindlichen Tragabschnitts bezüglich ihrer Drehung nur dann blockiert werden können, wenn der davor befindliche Abschnitt belastet ist, wobei die im Ruhezustand befindlichen Detektoren (6) die Sperrklinken in der Drehlage der Rollen halten.

4. Rollenbahnförderer nach Anspruch 3, dadurch gekennzeichnet, daß der Detektor (6) eines jeden Abschnitts um eine Achse (13') drehbar ist, die parallel zu den Rollen (1) ist, daß eine Stange (11) fest mit der Schwenkachse des Detektors verbunden und in eine Ruhelage mittels einer Feder (9) vorgespannt ist, daß eine Klinke (13), die um einen Punkt des Gestells schwenkbar ist, mittels einer Feder (14) zur Anlage an eine Rolle (1) gebracht ist, daß ein Anschlag (16) an einem Seilzug (17) befestigt ist, und zwar in der Ruhelage des Detektors als Stütze vor der und gegen die Klinke (13) und daß der Seilzug (17) von den Stangen (11) der beiden aufeinander folgenden Abschnitte mittels der am Seilzug (17) befestigten Anschläge (18) vor diesen an ihnen anliegt.

5. Rollenbahnförderer nach einem der Ansprüche 1 bis 4, dadurch gekennzeichnet, daß jeder Abschnitt von wenigstens zwei Rollen (1) und einem von den Rollen angetriebenen Riemen (32) gebildet ist, wobei ein Detektor (6) zwischen zwei baukastenartigen, aufeinander folgenden Abschnitten angeordnet ist und jeder Detektor jeden Abschnitt blockieren und entblockieren kann.

FIG 1

FIG 2

FIG 3

FIG 4

FIG 5

0 084 548